# EUROPEAN PATENT APPLICATION

(11) **EP 4 769 734 A1**
(43) Date of publication of application: **01.07.2026**
(21) Application number: 25787010.5
(22) Date of filing: 31.01.2025
(51) Int. Cl.: H01M 50/262, H01M 50/291, H01M 50/24, H01M 50/249, F16B 31/00

(54) **BATTERY PACK AND VEHICLE INCLUDING SAME**

(30) Priority: 08.04.2024 KR 20240047645
(71) Applicant: LG ENERGY SOLUTION, LTD., Seoul 07335 (KR)
(72) Inventor: LEE, Sang-Joon, Yuseong-gu, Daejeon 34122 (KR); RO, Yong-Hwan, Yuseong-gu, Daejeon 34122 (KR); MUN, Jeong-O, Yuseong-gu, Daejeon 34122 (KR); ARK, Shin-Young, Yuseong-gu, Daejeon 34122 (KR); HWANG, Tae-Won, Yuseong-gu, Daejeon 34122 (KR)
(74) Representative: Hoffmann Eitle
(86) International application number: PCT/KR2025/001604
(87) International publication number: WO 2025/216411

(57) **Abstract**

A battery pack according to the present disclosure may include: a pack case having a storage space formed therein to store a plurality of battery cells, and an opening formed on one side; a pack lid configured to cover the opening; a partition frame coupled to the pack case so as to partition the storage space; a bolt having at least a portion passing through the pack lid and coupled to the partition frame; an insertion hole formed to be recessed in the partition frame; and a nut configured to be press-inserted into the insertion hole and to engage with the bolt, wherein at least a portion of the nut may be configured as a deformable portion of a material that is deformable by a compressive force and whose physical properties change in a predetermined high-temperature environment to degrade bonding strength between the bolt and the partition frame.

## Description

### TECHNICAL FIELD

The present disclosure relates to a battery pack and, more specifically, to a battery pack in which the pack lid swells in response to increased internal pressure when a thermal event occurs in the battery pack, thereby reducing the internal pressure of the battery pack, slowing down the rate of increase in internal pressure, and delaying thermal propagation.

This application is based on and claims priority from Korean Patent Application No. 10-2024-0047645, filed on April 08, 2024, with the Korean Intellectual Property Office, the disclosure of which is incorporated herein in its entirety by reference.

### BACKGROUND ART

Semi-permanent batteries that convert electrical energy into chemical energy and can be repeatedly charged and discharged are called secondary batteries distinguished from primary batteries that cannot be reused after use.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS (energy storage system) batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than the appropriate temperature, and failure of heat control to an appropriate temperature is likely to lead to unexpected ignition or explosion. In addition, since the battery pack has a structure in which the secondary batteries are intensively stored inside a pack case, it may be vulnerable to thermal events.

Accordingly, if a specific battery module overheats or a thermal event such as thermal runaway occurs, the internal pressure inside the battery pack increases due to venting gas and flame generated in the battery module where the event occurred, accelerating the accumulation of thermal energy, which may easily lead to thermal propagation to adjacent battery modules. This may lead to a problem of serial thermal runaway of battery modules and explosion of the entire battery pack.

Accordingly, it is necessary to improve the structure of the battery pack to lower the internal pressure increased inside the battery pack due to venting gas and flame generated from a thermal event in the battery module that initially ignited and to effectively disperse the thermal energy, thereby delaying thermal propagation to neighboring battery modules.

### DISCLOSURE

### Technical Problem

The present disclosure is designed to solve the problems of the related art, and therefore the present disclosure is directed to providing a battery pack with reinforced structural rigidity and a vehicle including the same.

In addition, the present disclosure is to provide a battery pack with reinforced bonding strength between a bolt and a partition frame and a fixing strength between a nut and a partition frame, and a vehicle including the same.

In addition, the present disclosure is to provide a battery pack capable of effectively preventing thermal propagation when a thermal event occurs inside the battery pack, and a vehicle including the same.

In addition, the present disclosure is to provide a battery pack with improved assembly efficiency and productivity of a pack case, and a vehicle including the same.

In addition, the present disclosure is to provide a battery pack with improved structural stability and a vehicle including the same.

In addition, the present disclosure is to provide a battery pack capable of effectively preventing thermal propagation by preventing the inflow of oxygen and the emission of flame, and a vehicle including the same.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a pack case having a storage space formed therein to store a plurality of battery cells, and an opening formed on one side; a pack lid configured to cover the opening; a partition frame coupled to the pack case so as to partition the storage space; a bolt having at least a portion passing through the pack lid and coupled to the partition frame; an insertion hole formed to be recessed in the partition frame; and a nut configured to be press-inserted into the insertion hole and to engage with the bolt, wherein at least a portion of the nut may be configured as a deformable portion of a material that is deformable by a compressive force and whose physical properties change in a predetermined high-temperature environment to degrade bonding strength between the bolt and the partition frame.

The pack lid may be configured to swell when internal pressure of the storage space increases.

A cross-sectional area of the deformable portion may be configured larger than a cross-sectional area of the insertion hole.

The deformable portion may be configured as one of resin and rubber, or a composite material of the two.

The entirety of the nut may be configured as the deformable portion.

The deformable portion may have a cross-section in a shape of a circle.

The deformable portion may have a cross-section in a shape of a polygon.

The deformable portion may have a constant width in a longitudinal cross-section.

The deformable portion may not have a constant width in a longitudinal cross-section.

The nut may have a nut portion having a female thread formed on an inner side to correspond to the bolt, and the nut portion may be disposed to a side of the pack lid side with respect to the deformable portion.

The nut portion may include a protrusion protruding in a direction different from a fastening direction of the bolt, and the deformable portion may surround the protrusion.

The battery pack may further include a bushing disposed between the pack lid and the nut such that the bolt passes therethrough.

The bushing may be in close contact with the pack lid and the nut.

At least a part of the bushing may be bonded to the pack lid.

The bushing may not have a female thread formed on an inner side.

The battery pack may further include a sealing member disposed between the pack lid and the bolt to seal them.

In another aspect of the present disclosure, there is provided a vehicle including at least one battery pack according to the present disclosure.

### Advantageous Effects

According to the present disclosure, it is possible to provide a battery pack with reinforced structural rigidity by a bolt and a nut, and a vehicle including the same.

In addition, it is possible to provide a battery pack with reinforced bonding strength between a bolt and a partition frame and a fixing strength between a nut and a partition frame, and a vehicle including the same.

In addition, it is possible to provide a battery pack capable of effectively preventing thermal propagation due to deterioration of bonding strength between a nut and a partition frame when a thermal event occurs inside the battery pack, and a vehicle including the same.

In addition, it is possible to provide a battery pack in which a pack lid swells when a thermal event occurs inside the battery pack, thereby effectively preventing thermal propagation, and a vehicle including the same.

In addition, it is possible to provide a battery pack with improved assembly efficiency and productivity of a pack case and structural stability by a bolt and a nut, and a vehicle including the same.

In addition, it is possible to provide a battery pack with further improved assembly efficiency and productivity by a bushing, and a vehicle including the same.

In addition, it is possible to provide a battery pack capable of effectively preventing thermal propagation by preventing the inflow of oxygen and the emission of flame, and a vehicle including the same.

The effects obtainable from the present disclosure are not limited to the above-mentioned effects, and other effects not mentioned above will be clearly understood by those skilled in the art from the description of the invention described below.

### BRIEF DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating the entire appearance of a battery pack according to an embodiment of the present disclosure.
FIG. 2 is an exploded perspective view of the battery pack in FIG. 1.
FIG. 3 is a cross-sectional view illustrating a bolt and a nut engaging with each other in a battery pack according to an embodiment of the present disclosure.
FIG. 4 is a side cross-sectional view illustrating a bolt and a nut separated from each other in a battery pack according to an embodiment of the present disclosure.
FIG. 5 is a cross-sectional view taken along line A - A' in FIG. 1.
FIG. 6 is a cross-sectional view illustrating the pack lid that has swollen in FIG. 5.
FIG. 7 is a perspective view illustrating a nut of a battery pack according to a modification of an embodiment of the present disclosure.
FIG. 8 is a cross-sectional view illustrating a nut of a battery pack according to another modification of an embodiment of the present disclosure.
FIG. 9 is a cross-sectional view illustrating a nut of a battery pack according to another embodiment of the present disclosure.
FIG. 10 is a cross-sectional view illustrating a battery pack in which a bushing is further disposed on a bolt and a nut according to an embodiment of the present disclosure.
FIG. 11 is a cross-sectional view illustrating a battery pack in which a sealing member is further provided on a bolt and a nut according to an embodiment of the present disclosure
FIG. 12 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

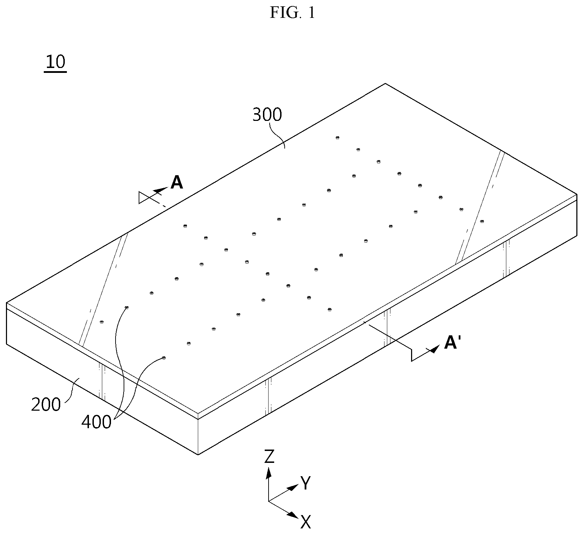

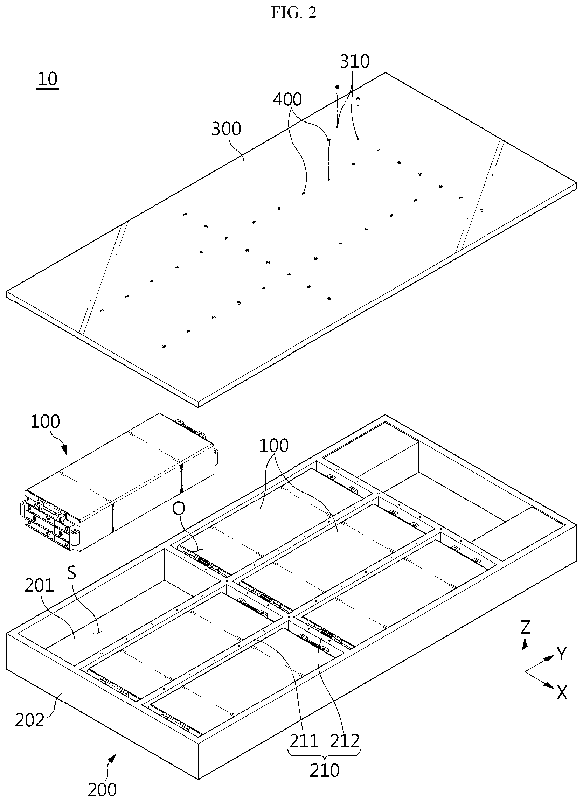

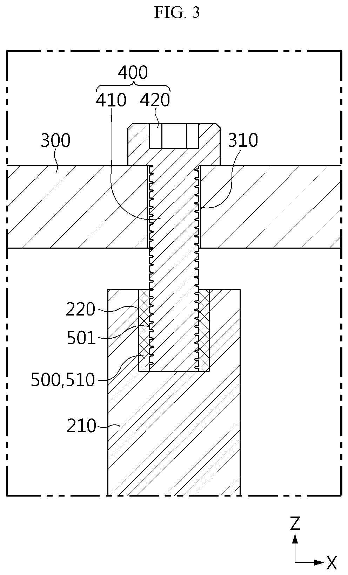

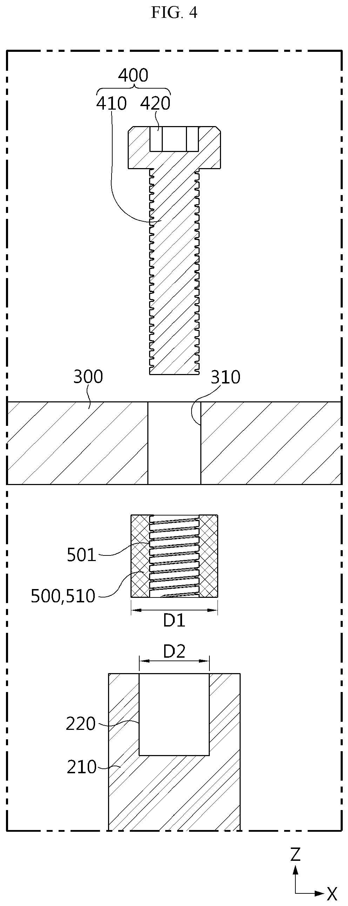

FIG. 1 is a perspective view illustrating the entire appearance of a battery pack according to an embodiment of the present disclosure, FIG. 2 is an exploded perspective view of the battery pack in FIG. 1, FIG. 3 is a cross-sectional view illustrating a bolt and a nut engaging with each other in a battery pack according to an embodiment of the present disclosure, and FIG. 4 is a side cross-sectional view illustrating a bolt and a nut separated from each other in a battery pack according to an embodiment of the present disclosure.

Hereinafter, a battery pack according to an embodiment of the present disclosure will be described in detail with reference to FIGS. 1 to 4. A battery pack 10 according to an embodiment of the present disclosure includes a pack case 200, a pack lid 300, a partition frame 210, a bolt 400, and a nut 500.

A storage space S and an opening O are formed in the pack case 200. A plurality of battery cells 100 are stored in the storage space S. The battery cell 100 may be understood as a secondary battery including an electrode assembly, and a pouch case that stores an electrolyte and the electrode assembly. In the present embodiment, a pouch-type battery cell 100 having a high energy density and easy stacking will be described, but the disclosure is not limited thereto, and it is obvious that a cylindrical or prismatic secondary battery may be applied to the battery cell 100.

The pouch-type battery cell 100 may include a pair of electrode leads that are connected to the electrode assembly and extend outside the pouch case, thereby functioning as electrode terminals. The battery cell 100 may further include electrical components such as a bus-bar, a bus-bar frame, and a module connector, which are adjacent to the pair of electrode leads.

The battery cells 100 may be stored in units of modules as a battery module in the storage space S of the pack case 200. In this case, the battery module may include a module case. At least one battery cell 100 may be stored in the module case. The module case may be made of a metal material or a plastic material such as ABS resin having high rigidity and durability in order to physically or chemically protect the stored battery cells 100. A terminal of the battery module may be provided on the side of the module case. The terminal may be either a positive electrode or a negative electrode, and may be disposed on both sides or one side of the module case.

The storage space S is formed inside the pack case 200. The pack case 200 includes a bottom 201 and a side wall 202 surrounding the bottom 201, and the bottom 201 and the side wall 202 form a storage space S therein.

A partition frame 210 is coupled to the pack case 200. The partition frame 210 is coupled to the pack case 200 so as to partition the storage space S. The partition frame 210 may be disposed across the storage space S. The partition frame 210 may include a horizontal frame 211 and a vertical frame 212. The horizontal frame 211 may be formed to extend in the Y direction to partition the storage space S along the X direction. The vertical frame 212 may be formed to extend in the X direction to partition the storage space S along the Y direction. Although the pack case 200 has two horizontal frames 211 and one vertical frame 212 in the present disclosure, the number of horizontal frames 211 and vertical frames 212 and the number of battery cells 100 stored therein are not limited thereto. The horizontal frame 211 and vertical frame 212 may also be referred to as a cross beam and a center beam.

In order to withstand the load of the battery cells 100 and protect the battery cells 100 from external force, the pack case 200 and the partition frame 210 may be made of a metal material such as steel or aluminum.

The opening O is formed on one side of the pack case 200. As shown in the embodiment, the opening O may be formed on the upper side of the pack case 200. A pack lid 300 is disposed on the opening O. The pack lid 300 is disposed to cover the opening O. The pack lid 300 may cover the storage space S of the pack case 200 to isolate the storage space S from the outside. The pack lid 300 may be configured in a shape corresponding to the shape of the opening O. For example, if the opening O has a rectangular shape, the pack lid 300 may also be configured in a rectangular shape. The pack lid 300 may be configured slightly larger than the opening O so as to cover the edges of the opening O. The pack lid 300 may be configured as a thin plate. For example, the pack lid 300 may be configured as a thin rectangular plate. The pack lid 300 may be made of a metal material such as aluminum, which is the same as or similar to the pack case 200 and the partition frame 210. As another example, the pack lid 300 may be configured as a material capable of elastic deformation or plastic deformation by an external force.

The bolt 400 is configured such that at least a portion thereof passes through the pack lid 300 so as to be coupled to the partition frame 210. A plurality of bolts 400 may be provided. The bolt 400 may pass in a direction parallel to the Z direction. The bolt 400 may be coupled to the partition frame 210 by being fastened to the nut 500.

The bolt 400 may be configured such that at least a portion thereof extends toward one end, and at least a portion of the one end may pass through the pack lid 300. The bolt 400 may include a male thread 410 and a head 420, and the male thread 410 may pass through the pack lid 300. The bolt 400 may be made of a metal material such as steel/SUS. Such a material is resistant to high temperatures, has excellent rigidity, and secures high fastening strength.

A through-hole 310 may be formed in the pack lid 300 so that the bolt 400 may pass therethrough. A number of through-holes 310 corresponding to the number of bolts 400 may be formed at positions corresponding to the positions of the bolts 400. Since the through-hole 310 does not have a female thread, the male thread 410 of the bolt 400 may simply pass through the through-hole 310, so that the head 420 may be seated on the upper side of the pack lid 300 without passing through the through-hole 310.

An insertion hole 220 is formed in the partition frame 210. The insertion hole 220 may be formed in an area of the partition frame 210 facing the pack lid 300. The insertion hole 220 may be formed at the upper end of the partition frame 210. The insertion hole 220 may not have threads formed, and in this case, separate tap processing is unnecessary for the insertion hole 220, so that the time and cost required for processing the insertion hole 220 may be reduced.

The nut 500 is configured to be press-inserted into the insertion hole 220, and the bolt 400 engages therewith. The nut 500 may have a fastening hole 501 formed corresponding to the male threaded 410 of the bolt 400 so that the bolt 400 may be fastened. The fastening hole 501 may be formed with an upper opening through which the bolt 400 is inserted. A female thread, corresponding to the male thread 410 formed on the bolt 400, may be formed on the inner side of the fastening hole 501.

A number of nuts 500 corresponding to the number of bolts 400 may be disposed at positions corresponding to the positions of the bolts 400. A plurality of nuts 500 may be disposed spaced apart from each other. The gap between a pair of adjacent nuts 500 may be configured differently from the gap between another pair of adjacent nuts 500. The nuts 500 may be disposed only in a partial area of the partition frame 210 or may be disposed in the entire area of the partition frame 210.

The pack lid 300 may be disposed on the opening O of the pack case 200 in the state where a plurality of bolts 400 and nuts 500 engage with each other in the pack lid 300 while aligning the respective nuts 500 with the corresponding insertion holes 220, and then the pack lid 300 may be pressed toward the partition frame 210, so that the respective nuts 500 may be press-inserted into the corresponding insertion holes 220 at once. This simple assembly process may improve the assembly efficiency and productivity of the battery pack 10.

The nut 500 is configured to have a deformable portion 510 at least in part. The deformable portion 510 may be deformed by a compressive force. The deformable portion 510 may be press-inserted into the insertion hole 220 formed in the partition frame 210. That is, the deformable portion 510 may be inserted into the insertion hole 220 in a compressed state. The deformable portion 510 may be configured as an elastic material. The deformable portion 510 may also be configured as a hard or high-strength material in order to form a high restoring force or repulsive force when deformed by, for example, compression. In this case, as the deformable portion 510 is inserted into the insertion hole 220 in a compressed state, the deformable portion 510 may exert a high restoring force or repulsive force on the inner side of the insertion hole 220 due to the restoring feature of the deformable portion 510 to its original state, and at the same time, the insertion hole 220 may exert a high vertical force on the side of the deformable portion 510. Therefore, the deformable portion 510 may be firmly fixed inside the insertion hole 220, so that the structural rigidity of the battery pack 10 may be further strengthened.

The deformable portion 510 may be configured through the entirety of the nut 500. In this case, the deformable portion 510 itself may constitute the nut 500. In addition, a fastening hole 501 may be formed on the inner side of the deformable portion 510 such that the bolt 400 is fastened thereto. As described above, in the case where the deformable portion 510 constitutes the entirety of the nut 500, the structure of the nut 500 may be simplified, and thus the manufacturing of the nut 500 may be facilitated. Although the deformable portion 510 is illustrated to constitute the entirety of the nut 500 in FIGS. 3 and 4 for convenience of explanation, it is not limited thereto.

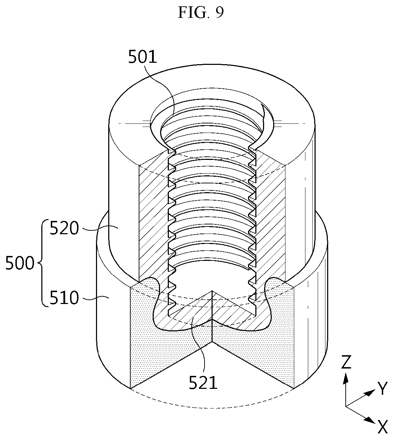

Alternatively, the deformable portion 510 may also constitute a part of the nut 500. In the case where the deformable portion 510 constitutes a part of the nut 500, the nut 500 may have a separate nut portion 520 in addition to the deformable portion 510, like the nut 500 of the battery pack 10 according to another embodiment of the present disclosure described below with reference to FIG. 9.

The cross-sectional area of the deformable portion 510 may be configured larger than the cross-sectional area of the insertion hole 220. Preferably, the cross-sectional area of the deformable portion 510 may be formed slightly larger than the cross-sectional area of the insertion hole 220. Here, the cross-sectional area indicates the cross-sectional area based on the insertion direction or the fastening direction of the bolt 400. As the cross-sectional area of the deformable portion 510 is configured larger than the cross-sectional area of the insertion hole 220, the degree of compression of the deformable portion 510 may increase when the deformable portion 510 is inserted into the insertion hole 220. The difference between the cross-sectional area of the deformable portion 510 and the cross-sectional area of the insertion hole 220 may be appropriately configured so that the deformable portion 510 may be easily press-inserted into the insertion portion and so that the deformable portion 510 may be sufficiently and firmly fixed to the insertion portion in a compressed state.

The insertion direction or the fastening direction of the bolt 400 may be parallel to the Z direction as illustrated in FIGS. 1 to 4. When the bolt 400 is inserted and compressed into the insertion hole 220 in the Z direction, the restoring force or repulsive force applied from the deformable portion 510 to the insertion hole 220 and the normal force applied from the insertion hole 220 to the deformable portion 510 may be formed parallel to the X-Y plane.

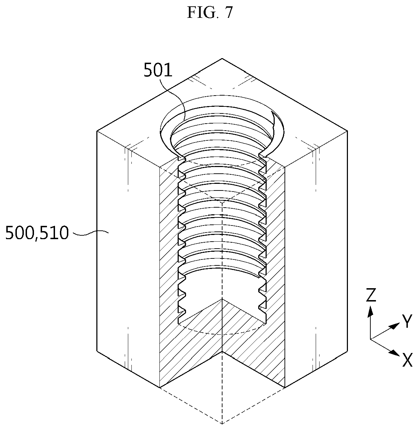

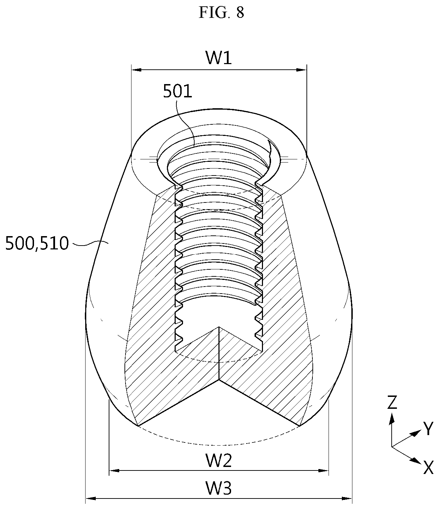

The cross-sectional shape of the deformable portion 510 may be formed similar to the cross-sectional shape of the insertion portion. For example, the insertion portion may be formed to be recessed into a cylindrical shape, and the deformable portion 510 may be formed in a cylindrical shape having a diameter D1 that is slightly greater than the diameter D2 of the insertion portion (see FIG. 4). As described above, in the case where the cross-section of the deformable portion 510 is formed in a circular shape, even if the deformable portion 510 rotates around the central axis, it is able to be inserted into the insertion portion, thereby facilitating press-insertion of the deformable portion 510 into the insertion portion. However, the shape of the deformable portion 510 is not limited thereto, and may be formed in various shapes as will be described with reference to FIGS. 7 and 8 below.

The deformable portion 510 may have a constant width. Specifically, the deformable portion 510 may have a width that is constant from one side to the other side. Here, the width indicates the dimension in the case where the insertion direction or the fastening direction of the bolt 400 indicates a longitudinal direction.

For example, the deformable portion 510 may be formed in a cylindrical shape having the same diameter from top to bottom. In this case, as the width of the deformable portion 510 is formed constant, the press-fitting of the deformable portion 510 into the insertion portion becomes easy, and the deformable portion 510 may be uniformly compressed from one side to the other side.

The nut 500 is configured as a material capable of securing sufficient structural rigidity in a normal state. The deformable portion 510 of the nut 500 is configured as a material whose properties change in a predetermined high-temperature environment to degrade the bonding strength between the bolt 400 and the partition frame 210. The material may be referred to as a high-temperature vulnerable material. Here, the predetermined high-temperature environment may be, for example, a temperature environment of 100 to 250 degrees C, and preferably, a temperature environment of 150 to 200 degrees C. When a thermal event occurs inside the battery pack 10, the predetermined high-temperature environment may be created due to venting gas and solid discharges, and in this case, the internal pressure of the battery pack 10 may increase. Here, the change in properties may be understood as, for example, melting, a reduction in brittleness, or melting while brittleness decreases.

When a high-temperature and high-pressure thermal event occurs inside the battery pack 10, the properties of the deformable portion 510 of the nut 500 may change, so that the fixing strength between the pack lid 300 and the partition frame 210 may be lowered, thereby securing a space for the pack lid 300 to swell. Through this, the thermal propagation may be prevented.

Conventionally, when manufacturing a battery pack 10, bolts and nuts made of steel/SUS are applied to the fastening portion between the pack case 200 and the pack lid 300. However, in such a battery pack 10, even when a thermal event occurs, the pack lid 300 does not swell due to the strong bolting. That is, the conventional battery pack 10 is vulnerable to the thermal propagation because the pack lid 300 is fixed so that it could not swell due to the strong bolting.

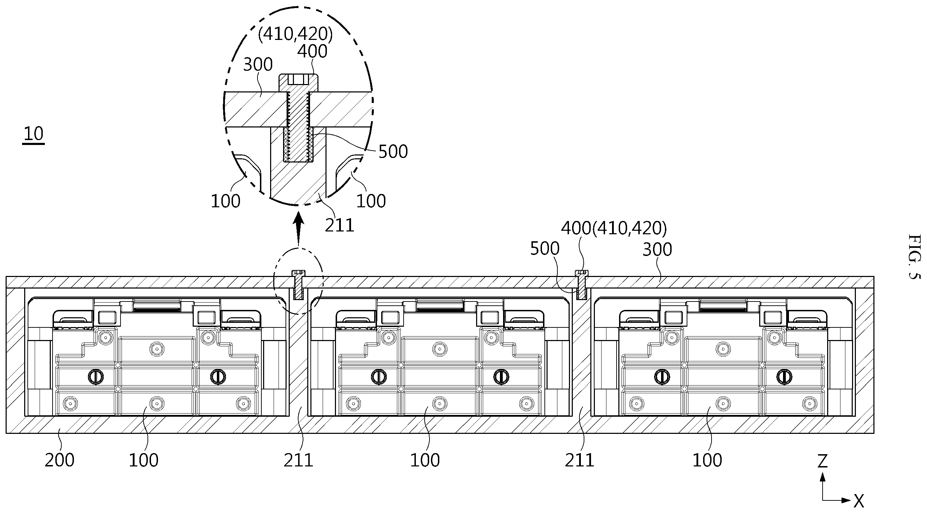

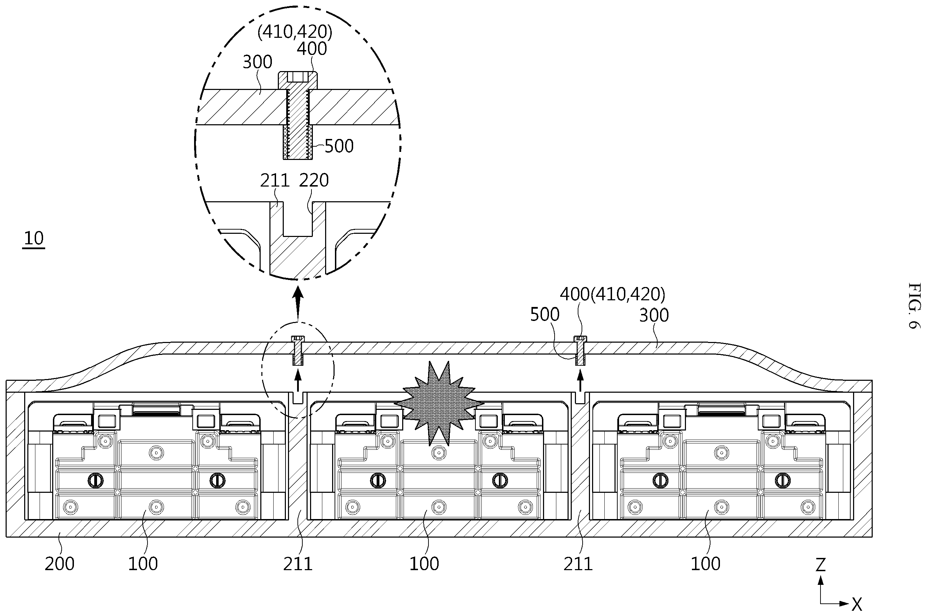

On the other hand, the battery pack 10 according to an embodiment of the present disclosure may secure, by improving the nut 500, the structural stability to the extent that vibration and impact test conditions can be met in normal conditions, while reducing the bonding strength between the bolt 400 and the partition frame 210 when a thermal event such as ignition of the battery cell 100 occurs such that the pack lid 300 swells, thereby preventing thermal propagation. This effect will be discussed in more detail in the description below with reference to FIGS. 5 and 6.

The deformable portion 510 of the nut 500 may be configured as either resin or rubber, or a composite of the two. That is, the high-temperature vulnerable material may be configured as either resin or rubber, or a composite of the two. The high-temperature vulnerable material may be a moldable material. The melting point of the high-temperature vulnerable material may be configured lower than the melting point of the material of the partition frame 210.

Meanwhile, the nut 500 may be configured as an elastic material as described above, or may also be configured as a hard or high-strength material to form a high restoring force or repulsive force when compressed or deformed. Accordingly, when the nut 500 is press-inserted into the insertion hole 220 in a compressed state, the nut 500 may apply a high restoring force or repulsive force to the insertion hole 220.

The resin may absorb impact and vibration to maintain the fastening portion. The resin may be a natural resin, a synthetic resin, a high-strength resin, and may be a thermoplastic resin that may melt in a high-temperature environment. The resin may be, for example, polycarbonate, polyurethane, polyester resin, or the like, but these are only examples and the resin is not limited thereto. Here, the resin may be a resin that originally has the property of melting or softening in a high-temperature environment of 100 to 250 degrees C, or a resin that contains an additive that adjusts the melting point or glass transition temperature to a temperature within the high-temperature environment range. Preferred resins may include engineering plastics such as MC (Mono Casting) nylon or polyacetal, or ether-based and ester-based polyurethanes.

MC nylon has a structure in which imide bonds and ether bonds are mixed, and the imide bonds provide appropriate heat resistance and strength, while the ether bonds exhibit excellent processability. MC nylon has a strength similar to metal, is easier to process than general plastics, and is resistant to wear. It may withstand high temperatures up to 200 degrees C and melt at temperatures higher than that, thereby lowering the bonding strength between the bolt 400 and the partition frame 210 through the deformable portion 510.

Polyacetal is a high-strength thermoplastic plastic with a hardness close to metal. It may withstand temperatures of about 80 to 120 degrees C, but it has heat resistance so as to withstand temperatures of about 150 degrees for continuous use for a short period of time, so it may be applied without difficulty to a temperature environment where the battery pack 10 is used in a normal state.

The rubber may be natural rubber, synthetic rubber, or high-strength rubber, and may be a thermoplastic rubber that may melt in a high-temperature environment. The rubber may be, for example, silicone elastomer, epoxy elastomer, or polyurethane elastomer, but these are only examples, and it is not limited thereto. Here, the rubber may be an original rubber that has the property of melting or softening in a high-temperature environment of 100 to 250 degrees C, or may be a rubber that includes an additive that adjusts the melting point to a temperature within the high-temperature environment range.

Here, the bonding strength between the bolt 400 and the partition frame 210 may be reduced in the following two cases. The first case is that the fixing strength between the nut 500 and the insertion hole 220 is lowered. In this case, the nut 500 and the insertion portion may enter a state where they are easily separated from each other (hereinafter referred to as a first state). The second case is that the fastening strength between the bolt 400 and the nut 500 is reduced while the nut 500 is fixed to the insertion hole 220. In this case, the bolt 400 and the nut 500 enter a state where they are easily separated from each other (hereinafter referred to as a second state).

FIG. 5 is a cross-sectional view taken along line A - A' in FIG. 1, and FIG. 6 is a cross-sectional view illustrating the pack lid that has swollen in FIG. 5.

Hereinafter, on operation in which the pack lid 300 of the battery pack 10 according to an embodiment of the present disclosure swells will be described in detail with reference to FIG. 5 and FIG. 6. FIG. 5 shows the battery pack 10 before the pack lid 300 swells, and FIG. 7 shows the battery pack 10 with the pack lid 300 swollen.

The battery pack 10 in a normal state may have a cross-section as shown in FIG. 5. The battery pack 10 according to an embodiment of the present disclosure may be configured such that the pack lid 300 swells to the state shown in FIG. 6 when the internal pressure of the storage space increases.

When a thermal event occurs inside the battery pack 10, high-temperature heat may be generated due to venting gas and solid discharges, and the internal pressure may increase. The high-temperature heat may be transferred to the bolt 400 and nut 500 that are engaged with each other (see FIG. 5), and thus a predetermined high-temperature environment may be created in the nut 500. In this high-temperature environment, the bonding strength between the bolt 400 and the partition frame 210 may be lowered. At the same time, when the increased internal pressure inside the pack case 200 acts on the pack lid 300, the bolt 400 may be decoupled and separated from the partition frame 210. Then, the pack lid 300 and the partition frame 210 may be slightly separated from each other to generate a space therebetween, thereby lowering the increased internal pressure. If the increased internal pressure is not controlled and remains in the battery pack 10, an event such as ignition occurring in some battery cells 100 is likely to be transferred to other battery cells 100. However, according to the present disclosure, the pack lid 300 may be separated by reducing the bonding strength between the bolt 400 and the partition frame 210 to lower the increased internal pressure, thereby preventing the thermal propagation.

In addition, in the case where the pack lid 300 is made of a material capable of elastic deformation or plastic deformation by an external force, the pack lid 300 may further swell toward the direction in which the internal pressure is applied (see FIG. 6). As the pack lid 300 swells, the volume of the space between the pack case 200 and the pack lid 300 may increase, so that the increased internal pressure may be relieved, and at the same time, the flow of venting gas or solid discharges may be formed more smoothly. Through this, the thermal propagation may be effectively delayed or prevented.

Meanwhile, although FIG. 6 shows a first state in which the nut 500 is separated from the insertion hole 220 in the state where the bolt 400 and the nut 500 are coupled to each other, unlike what is illustrated in FIG. 6, a second state in which the bolt 400 is separated from the nut 500 while the nut 500 is fixed to the insertion hole 220 is also possible.

FIG. 7 is a perspective view illustrating a nut of a battery pack according to a modification of an embodiment of the present disclosure, and FIG. 8 is a cross-sectional view illustrating a nut of a battery pack according to another modification of an embodiment of the present disclosure.

Hereinafter, nuts 500 of battery packs 10 according to a modification of an embodiment of the present disclosure and another modification thereof will be described in detail with reference to FIGS. 7 and 8. For convenience of explanation, in FIGS. 7 and 8, the deformable portion 510 is illustrated as constituting the entire nut 500.

Referring to FIG. 7, a nut 500 of a battery pack 10 according to a modification of an embodiment of the present disclosure may have a polygonal cross-section of the deformable portion 510. For example, the cross-section of the deformable portion 510 may be formed as a rectangle as illustrated in FIG. 7, and although not illustrated in the drawing, it may also be formed in various polygonal shapes such as a triangle or a pentagon. As described above, in the case where the cross-section of the deformable portion 510 is configured as a polygon, rotation of the deformable portion 510 press-inserted into the insertion hole 220 may be prevented, so that the nut 500 may be more stably fixed to the partition frame 210, while maintaining the fastening strength between the nut 500 and the bolt 400.

Referring to FIG. 8, a nut 500 of a battery pack 10 according to another modification of an embodiment of the present disclosure may not have a uniform width of the deformable portion 510. Specifically, the width of the deformable portion 510 may not be uniform from one side to the other side. Here, the width indicates the dimension in the case where the insertion direction or the fastening direction of the bolt 400 indicates a longitudinal direction.

For example, as illustrated in FIG. 8, the width W1 of the upper side of the deformable portion 510 may be formed differently from the width W2 of the lower side. If the width W2 of the lower side is formed larger than the width W1 of the upper side, when the deformable portion 510 is press-inserted into the insertion hole 220, the fixing strength between the nut 500 and the partition frame 210 may be further strengthened. On the other hand, if the width W1 of the upper side is formed larger than the width W2 of the lower side, the deformable portion 510 may be more easily press-inserted into the insertion hole 220.

Meanwhile, the deformable portion 510 may be formed such that the central width W3 is larger than the upper width W1 or the lower width W2 so that the central portion between the upper and lower portions is convex. On the other hand, the central width W3 may be formed smaller than the upper width W1 or the lower width W2 so that the central portion is concave. In the case where the central portion is formed convex or concave, the nut 500 may be more firmly fixed to the partition frame 210.

FIG. 9 is a cross-sectional view illustrating a nut of a battery pack according to another embodiment of the present disclosure.

Hereinafter, a nut 500 of a battery pack 10 according to another embodiment of the present disclosure will be described in detail with reference to FIG. 9. A nut 500 of a battery pack 10 according to another embodiment of the present disclosure has a nut portion 520. That is, the nut 500 is configured with a deformable portion 510 and a separate nut portion 520.

A female thread corresponding to the male thread of the bolt 400 may be formed in the nut portion 520. That is, the fastening hole 501 described above may be formed in the nut portion 520. The nut portion 520 may be disposed to the side of the pack lid 300 with respect to the deformable portion 510. The deformable portion 510 may be disposed to the side far from the pack lid 300 with respect to the nut portion 520. The nut portion 520 may be disposed on the upper side as shown in FIG. 9, and the deformable portion 510 may be disposed on the lower side of the nut portion 520. In the case where the nut portion 520 and the deformable portion 510 are disposed in this manner, the fastening of the bolt 400 and the nut 500 may be stably performed, and the press-fitting of the deformable portion 510 into the insertion hole 220 may be facilitated. The nut 500 may be made of a metal material such as steel/SUS. Such a material is resistant to high-temperatures, has excellent rigidity, and secures high fastening strength.

The nut 500 may be configured as a nut 500 having a metal nut corresponding to the nut portion 520, such as a urethane pusher, and a resin cover such as a urethane cover corresponding to the deformable portion 510.

The nut portion 520 may have a protrusion 521. The protrusion 521 may protrude in a direction different from the fastening direction (or insertion direction) of the bolt 400, and the deformable portion 510 may surround the protrusion 521. The protrusion 521 may be formed integrally with the nut portion 520. The protrusion 521 may be formed on the bottom of the nut portion 520. The protrusion 521 may couple the deformable portion 510 to the nut portion 520 more stably and strongly.

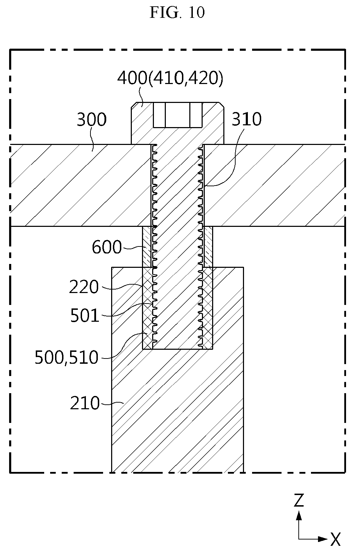

FIG. 10 is a cross-sectional view illustrating a battery pack in which a bushing is further disposed on a bolt and a nut according to an embodiment of the present disclosure.

Hereinafter, a bushing 600 will be described in detail with reference to FIG. 10. The bushing 600 is disposed between the pack lid 300 and the nut 500, and the bolt 400 passes through it. The bushing 600 may be made of a metal material such as steel/SUS. This material is resistant to high-temperatures and has excellent rigidity. The bushing 600 may further increase the fastening strength between the bolt 400 and the nut 500.

The bushing 600 may support the bolt 400. The bolt 400 may be supported by the bushing 600 before being engaged with the nut 500. The bushing 600 may guide the fastening or insertion of the bolt 400.

The bushing 600 may support the pack lid 300 and the nut 500. For example, the bushing 600 may support the pack lid 300 upward and the nut 500 downward. As described above, since the bushing 600 supports the pack lid 300 and the nut 500, even if impact or vibration is applied to the battery pack 10, this may be effectively buffered, thereby further enhancing structural stability.

The bushing 600 may be in close contact with the pack lid 300 and the nut 500. That is, the bushing 600 may be in close contact with both the pack lid 300 and the nut 500. The pack lid 300 and the nut 500 may be spaced apart from each other while maintaining a gap therebetween by the bushing 600. The bushing 600 may also seal the pack lid 300 and the nut 500.

At least a portion of the bushing 600 may be bonded to the pack lid 300. That is, the bushing 600 may be bonded and fixed to the pack lid 300, and the upper end of the bushing 600 may be bonded to the bottom surface of the pack lid 300. In this case, a plurality of bushings 600 fixed to the bottom surface of the pack lid 300 may guide the insertion of the corresponding bolts 400, so that a plurality of bolts 400 may be easily aligned before fastening.

The bushing 600 may not have a female thread on the inner side. That is, a female thread corresponding to the male thread of the bolt 400 is not formed on the inner side of the bushing 600, so that the bolt 400 may simply pass through the bushing 600. In this case, the bushing 600 may guide the insertion of the bolt 400. The bolt 400 is inserted into the female thread and engages with the female thread. However, if the female thread is not formed on the inner side of the bushing 600 as described above, the bolt 400 may pass through the bushing 600 without interruption and engage with only the female thread formed in the fastening hole 501 of the nut 500, so that the length or depth to which the bolt 400 is fastened may be reduced. In this case, the time required for connecting the bolt 400 may be shortened, so that the assembly efficiency and productivity of the battery pack 10 may be improved.

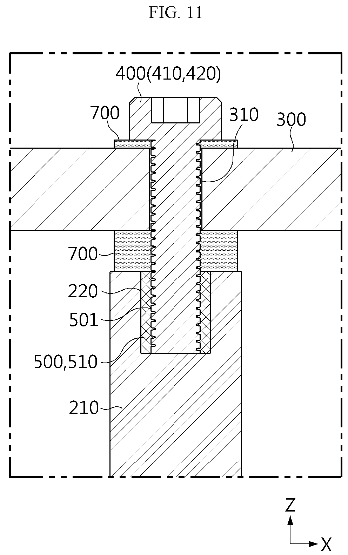

FIG. 11 is a cross-sectional view illustrating a battery pack in which a sealing member is further provided on a bolt and a nut according to an embodiment of the present disclosure

Hereinafter, a sealing member 700 will be described in detail with reference to FIG. 11. The sealing member 700 is configured to seal the gap between the pack lid 300 and the bolt 400. The sealing member 700 may be formed of a material capable of maintaining its properties even at high-temperatures, unlike the high-temperature vulnerable material described above.

The sealing member 700 may be disposed on the outer side of the pack lid 300, which is far from the partition frame 210. The sealing member 700 may be disposed between the head 420 of the bolt 400 and the outer side of the pack lid 300.

The sealing member 700 may be disposed on the inner side of the pack lid 300. In this case, the sealing member 700 may be disposed between the inner side of the pack lid 300 and the partition frame 210.

Although not shown in FIG. 11, the sealing member 700 may also be disposed inside the through-hole 310 of the pack lid 300.

A conventional battery pack 10 is vulnerable to thermal propagation due to the inflow of oxygen or the emission of flame through a bolting hole for bolting. In the battery pack 10 according to an embodiment of the present disclosure, the sealing member 700 may implement a seal between the bolt 400 and the pack lid 300 to prevent the inflow of oxygen or the emission of flame, thereby effectively preventing the thermal propagation.

Meanwhile, the combination of configurations in FIGS. 10 and 11 is also possible. That is, a battery pack 10 may also be implemented to include both the bushing 600 and the sealing member 700. In this case, a part of the sealing member 700 may be configured to seal the space between the pack lid 300 and the bushing 600 and/or the space between the bushing 600 and the nut 500.

Meanwhile, the battery pack 10 according to the present disclosure, although not illustrated, may further include various devices for controlling the charging and discharging of the battery cells 100, such as a BMS (Battery Management System), a current sensor, and a fuse.

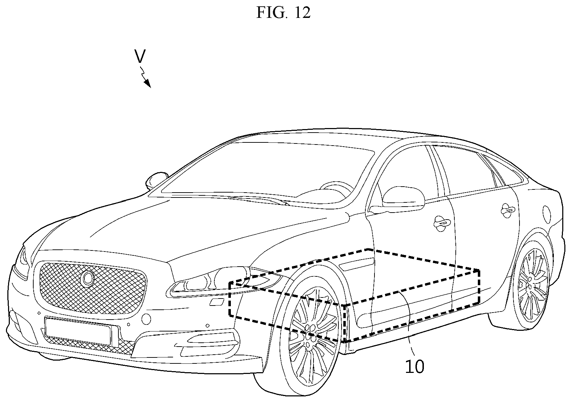

FIG. 12 is a drawing illustrating a vehicle according to an embodiment of the present disclosure.

Hereinafter, referring to FIG. 12, the battery pack 10 according to the present disclosure may be applied to a vehicle V such as an electric vehicle or a hybrid vehicle. That is, the vehicle V according to the present disclosure may include the battery pack 10 according to the present disclosure. The battery pack 10 may be installed in a body frame under a vehicle seat or in a trunk space, and the battery pack 10 may be disposed in a reversed order when installed in the vehicle, as needed.

Meanwhile, although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of symbols]

- 10:: battery pack
- 100:: battery cell
- 200:: pack case
- 201:: bottom
- 202:: side wall
- 210:: partition frame
- 211:: horizontal frame
- 212:: vertical frame
- 220:: insertion hole
- 300:: pack lid
- 310:: through-hole
- 400:: bolt
- 410:: male thread
- 420:: head
- 500:: nut
- 501:: fastening hole
- 510:: deformable portion
- 520:: nut portion
- 521:: protrusion
- 600:: bushing
- 700:: sealing member
- O:: opening
- S:: storage space
- V:: vehicle

## Claims

1. A battery pack comprising:
a pack case having a storage space formed therein to store a plurality of battery cells, and an opening formed on one side;
a pack lid configured to cover the opening;
a partition frame coupled to the pack case so as to partition the storage space;
a bolt having at least a portion passing through the pack lid and coupled to the partition frame;
an insertion hole formed to be recessed in the partition frame; and
a nut configured to be press-inserted into the insertion hole and to engage with the bolt,
wherein at least a portion of the nut
is configured as a deformable portion of a material that is deformable by a compressive force and whose physical properties change in a predetermined high-temperature environment to degrade bonding strength between the bolt and the partition frame.

2. The battery pack according to claim 1,
wherein the pack lid is configured to swell when internal pressure of the storage space increases.

3. The battery pack according to claim 1,
wherein a cross-sectional area of the deformable portion
is configured larger than a cross-sectional area of the insertion hole.

4. The battery pack according to claim 1,
wherein the deformable portion
is configured as one of resin and rubber, or a composite material of the two.

5. The battery pack according to claim 1,
wherein entirety of the nut is configured as the deformable portion.

6. The battery pack according to claim 1,
wherein the deformable portion
has a cross-section in a shape of a circle.

7. The battery pack according to claim 1,
wherein the deformable portion
has a cross-section in a shape of a polygon.

8. The battery pack according to claim 1,
wherein the deformable portion
has a constant width in a longitudinal cross-section.

9. The battery pack according to claim 1,
wherein the deformable portion
does not have a constant width in a longitudinal cross-section.

10. The battery pack according to claim 1,
wherein the nut has a nut portion having a female thread formed on an inner side to correspond to the bolt, and
wherein the nut portion
is disposed to a side of the pack lid side with respect to the deformable portion.

11. The battery pack according to claim 10,
wherein the nut portion
comprises a protrusion protruding in a direction different from a fastening direction of the bolt, and
wherein the deformable portion
surrounds the protrusion.

12. The battery pack according to claim 1,
further comprising a bushing disposed between the pack lid and the nut such that the bolt passes therethrough.

13. The battery pack according to claim 12,
wherein the bushing is in close contact with the pack lid and the nut.

14. The battery pack according to claim 12,
wherein at least a part of the bushing is bonded to the pack lid.

15. The battery pack according to claim 12,
wherein the bushing
does not have a female thread formed on an inner side.

16. The battery pack according to claim 1,
further comprising a sealing member disposed between the pack lid and the bolt to seal them.

17. A vehicle comprising at least one battery pack according to any one of claims 1 to 16.
